(19) Europäisches Patentamt
European Patent Office
Office européen des brevets

(11) **EP 4 607 880 A1**

(12) **EUROPEAN PATENT APPLICATION**
published in accordance with Art. 153(4) EPC

(43) Date of publication:
**27.08.2025 Bulletin 2025/35**

(21) Application number: **24813899.2**

(22) Date of filing: **07.04.2024**

(51) International Patent Classification (IPC):
**H04L 45/02** $^{(2022.01)}$     **H04W 40/24** $^{(2009.01)}$

(52) Cooperative Patent Classification (CPC):
**H04L 45/02; H04W 4/20; H04W 40/12; H04W 40/24**

(86) International application number:
**PCT/CN2024/086335**

(87) International publication number:
**WO 2024/244693 (05.12.2024 Gazette 2024/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.05.2023 CN 202310622100**

(71) Applicant: **ZTE Corporation
Shenzhen, Guangdong 518057 (CN)**

(72) Inventors:
• **CHEN, Junjiang**
  **Shenzhen, Guangdong 518057 (CN)**
• **GUO, Chengfeng**
  **Shenzhen, Guangdong 518057 (CN)**
• **LI, Jun**
  **Shenzhen, Guangdong 518057 (CN)**
• **LIU, Zhilong**
  **Shenzhen, Guangdong 518057 (CN)**

(74) Representative: **Ziebig Hengelhaupt Intellectual
Property Attorneys
Patentanwaltskanzlei PartGmbB
Leipziger Straße 49
10117 Berlin (DE)**

(54) **PATH DETERMINATION METHOD, COMMUNICATION DEVICE, AND STORAGE MEDIUM**

(57)     Provided are a path determination method, a communication device, and a storage medium. The path determination method comprises: first, acquiring a first network topology of an audio and video system, wherein attribute information of a link in the first network topology comprises transmission parameters of the link, and the transmission parameters of the link comprise a concavity parameter, an additive parameter, and a multiplicative parameter; then determining a link satisfying a concavity parameter constraint condition from the first network topology, and generating a second network topology on the basis of the link satisfying the concavity parameter constraint condition; generating a third network topology on the basis of key parameters of the link in the second network topology; determining a plurality of candidate paths on the basis of the third network topology; and determining a target path satisfying a path selection constraint condition from the plurality of candidate paths.

```
┌──────────────────────────────────────────────────────────┐
│ Acquire a first network topology of an audio and video system │──S101
└──────────────────────────────────────────────────────────┘
                            ↓
┌──────────────────────────────────────────────────────────┐
│ Determine a link satisfying a concavity parameter constraint condition from the │
│ first network topology, and generate a second network topology on the basis of  │──S102
│ the link satisfying the concavity parameter constraint condition │
└──────────────────────────────────────────────────────────┘
                            ↓
┌──────────────────────────────────────────────────────────┐
│ Generate a third network topology on the basis of key parameters of the link in │──S103
│ the second network topology │
└──────────────────────────────────────────────────────────┘
                            ↓
┌──────────────────────────────────────────────────────────┐
│ Determine a plurality of candidate paths on the basis of the third network │──S104
│ topology │
└──────────────────────────────────────────────────────────┘
                            ↓
┌──────────────────────────────────────────────────────────┐
│ Determine a target path satisfying a path selection constraint condition from the │──S105
│ plurality of candidate paths │
└──────────────────────────────────────────────────────────┘
```

FIG. 2

## Description

The present disclosure claims a priority to Chinese Patent Application No. 202310622100.7, filed on May 29, 2023, the entire content of which is incorporated into the present application by reference.

TECHNICAL FIELD

The present disclosure relates to the field of audio and video communication, and in particular, to a path determination method, and a communication apparatus, and a storage medium.

BACKGROUND

With the popularization of the mobile Internet and the commercialization of the 5th-generation mobile communication technology (5G), users' requirements for low-latency and high-reliability audio and video applications are growing increasingly. In some technologies, real-time audio and video communication (Real-Time Communication, RTC), with its long-term technical accumulation in the field of video services, quickly provides the industry with high concurrency, low delay, high-definition and smooth, safe and reliable full scene, fully interactive, and fully real-time audio and video services, which are applicable to various application scenarios such as online education, cloud conference, social entertainment, etc. Path planning is a core technology of the real-time audio and video network (Real Time Network, RTN), and the path planning refers to planning an optimal transmission path between respective edge nodes by aggregating and computing edge data.

SUMMARY

In an aspect, the embodiments of the present disclosure provide a path determination method. The path determination method includes:

acquiring a first network topology of an audio and video system, where attribute information of a link in the first network topology includes a transmission parameter of the link, and the transmission parameter of the link includes a concavity parameter, an additive parameter, and a multiplicative parameter;
determining a link satisfying a concavity parameter constraint condition from the first network topology, and generating a second network topology based on the link satisfying the concavity parameter constraint condition;
generating a third network topology based on a key parameter of a link in the second network topology, where the key parameter is a parameter with a highest degree of impact on a target service type among the additive parameter and the multiplicative parameter; and attribute information of a link in the third network topology includes a quantified score determined by the key parameter;
determining a plurality of candidate paths based on the third network topology; and
determining a target path satisfying a path selection constraint condition from the plurality of candidate paths.

In another aspect, the embodiments of the present disclosure provide a path determination apparatus. The path determination apparatus includes: an acquiring module and a processing module.
The acquiring module is configured to acquire a first network topology of an audio and video system, where attribute information of a link in the first network topology includes a transmission parameter of the link, and the transmission parameter of the link includes a concavity parameter, an additive parameter, and a multiplicative parameter;

the processing module is configured to determine a link satisfying a concavity parameter constraint condition from the first network topology, and generate a second network topology based on the link satisfying the concavity parameter constraint condition;
the processing module is further configured to generate a third network topology based on a key parameter of a link in the second network topology, where the key parameter is a parameter with a highest degree of impact on a target service type among the additive parameter and the multiplicative parameter; and attribute information of a link in the third network topology includes a quantified score determined by the key parameter;
the processing module is further configured to determine a plurality of candidate paths based on the third network topology; and determine a target path satisfying a path selection constraint condition from the plurality of candidate paths.

In yet another aspect, the embodiments of the present disclosure provide a communication apparatus. The communication apparatus includes: a processor and a memory; the memory has stored instructions executable by the processor; the processor is configured to execute the instructions, so that the communication apparatus implements the method provided in the above aspect.

In yet another aspect, the embodiments of the present disclosure provide a computer readable storage medium. The computer readable storage medium stores computer instructions, and the computer instructions, when executed on a computer, cause the computer to perform the method provided in any one of the above aspects.

In yet another aspect, the embodiments of the present disclosure provide a computer program product containing computer instructions. The computer instructions, when executed on a computer, cause the computer to perform the method provided in any one of the above aspects.

## BRIEF DESCRIPTION OF THE DRAWINGS

The drawings are used to provide a further understanding for the technical solutions of the present disclosure, constitute a part of the specification, are used to explain the technical solutions of the present disclosure in conjunction with the embodiments of the present disclosure, and do not constitute a limitation on the technical solutions of the present disclosure.

FIG. 1 is a schematic diagram of an architecture of an audio and video system according to some embodiments.
FIG. 2 is a method flowchart of a path determination method according to some embodiments.
FIG. 3 is a schematic diagram of a network topology according to some embodiments.
FIG. 4 is a schematic diagram of another network topology according to some embodiments.
FIG. 5 is a schematic diagram of a candidate path according to some embodiments.
FIG. 6 is a schematic diagram of components of a path determination apparatus according to some embodiments.
FIG. 7 is a structural schematic diagram of a path determination apparatus according to some embodiments.

## DETAILED DESCRIPTION

The technical solutions in the embodiments of the present disclosure will be described clearly and completely below in conjunction with the drawings in the embodiments of the present disclosure. It is obvious that the described embodiments are only a part of the embodiments of the present disclosure, but not all of the embodiments. Based on the embodiments in the present disclosure, all other embodiments obtained by those ordinary skilled in the art without creative efforts shall fall within the protection scope of the present disclosure.

In the description of the present disclosure, unless otherwise stated, the character "/" means "or", and for example, "A/B" may mean A or B. Herein, "and/or" is merely an association relationship for describing associated objects, which represents that there may be three kinds of relationships, for example, 'A and/or B' may represent: only A, only B, or both A and B. In addition, "at least one" means one or more, and "a/the plurality of/multiple" means two or more. The expressions "first" and "second", etc., do not limit the quantity and execution order, and the expressions "first" and "second" and the like are not necessarily used to limit the different items.

It should be noted that, in the present disclosure, the expressions such as "exemplary/exemplarily" or "for example" are used to present an example, illustration, or explanation. Any embodiment or design scheme described with "exemplary/exemplarily" or "for example" in the present disclosure should not be construed as preferred or advantageous over other embodiments or design schemes. Rather, the usage of the expressions, such as "exemplary /exemplarily" or "for example", etc., is intended to present relevant concepts in a detailed manner.

In some technologies, the path planning technology in RTN usually uses a synthetic parameter to represent characteristics of a plurality of parameters, by using the plurality of parameters as function variables to construct a function mapping model, and using the function value as a standard for path planning. However, the manner of path planning still has great limitations.

In actual applications, real-time audio and video communication service applications are usually based on an RTN system to achieve high-speed and high-quality data transmissions, and may have requirements for a plurality of parameters, and these parameters (e.g., a network delay, a packet loss rate, a bandwidth, etc.) are independent of each other. Therefore, based on the above manner of path planning, it is difficult to ensure that each parameter of a path satisfies service requirements.

In view of this, a path determination method is provided in the embodiments of the present disclosure, and the method includes: acquiring a first network topology of an audio and video system, where attribute information of a link in the first network topology includes a transmission parameter of the link, and the transmission parameter of the link includes a concavity parameter, an additive parameter, and a multiplicative parameter; determining a link satisfying a concavity parameter constraint condition from the first network topology, and generating a second network topology based on the link satisfying the concavity parameter constraint condition; generating a third network topology based on a key parameter of a link in the second network topology, where the key parameter is a parameter with a highest degree of impact on a target service type among the additive parameter and the multiplicative parameter; and attribute information of a link in the third network topology includes a quantified score determined by the key parameter; determining a plurality of candidate paths based on the third network topology; and determining a target path satisfying a path selection constraint condition from the plurality of candidate paths. In this way, path planning may be enabled to be applicable to various service scenarios, thereby improving the practicability and accuracy of the path planning.

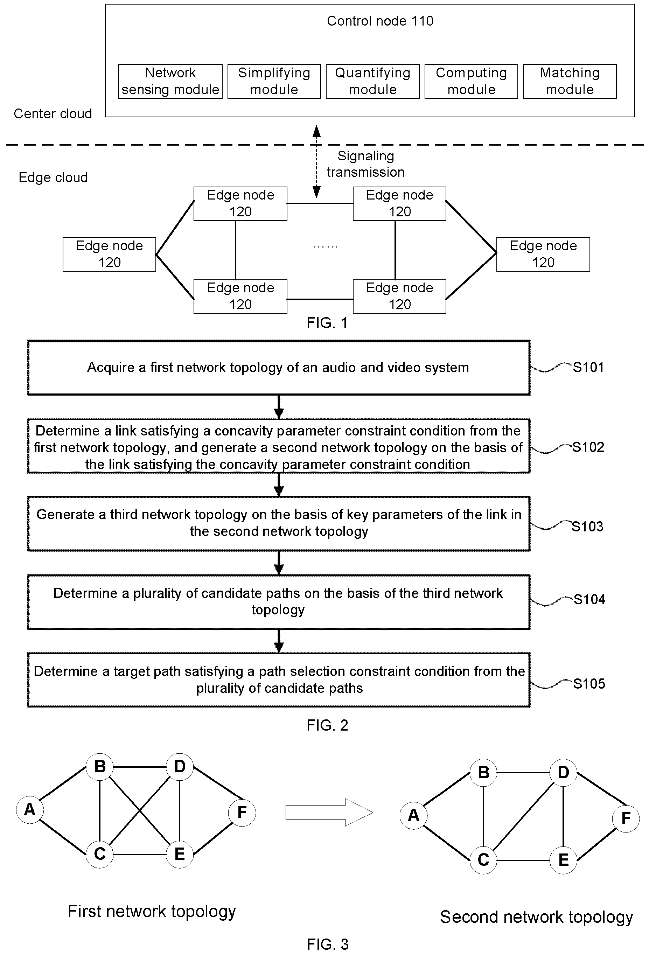

FIG. 1 shows an architecture of an audio and video system, provided in the embodiments of the present disclosure. As shown in FIG. 1, the audio and video system may include a control node 110 and edge nodes 120.

In some embodiments, the audio and video system may include an audio and video cloud network, and the audio and video system may be used to implement distributed deployment of infrastructure resources for edge computing, and to perform unified management on these resources. A deployed point with more resources and a concentrated location is referred to as a center cloud, and a deployed point with fewer resources and widely distributed location is referred to as an edge cloud (also referred to as an edge cloud node), and since the edge cloud is more widely distributed, the edge cloud is closer to a terminal device used by a user, that is, the edge cloud may be interpreted as a cloud computing platform close to the terminal device, and the center cloud may be interpreted as a cloud platform that uniformly manages a plurality of edge clouds.

The control node 110 is deployed in the above-mentioned center cloud, is responsible for controlling and managing a medium node, and may receive and process node information and link quality information reported by the medium node. In some embodiments, the control node 110 may be responsible for controlling and scheduling the edge node 120 in the audio and video system, and managing system data. In some embodiments, the control node 110 may include a network sensing module, a simplifying module, a quantifying module, a computing module, and a matching module.

The edge node 120 is deployed in the above-mentioned edge cloud, and a data transmission path may be composed of a plurality of edge nodes 120 and links between the nodes. The edge node 120 may be composed of a plurality of small nodes and distributed over a wide range. The edge node 120 may be used to forward service data in the RTN network at high speed and high quality.

In some embodiments, the audio and video system may further include a client 130 accessing the edge node 120. The client 130 may be various physical devices or software applications (e.g., a mobile phone application program (Application, App), a software development kit (Software Development Kit, SDK) or a terminal device (e.g., a mobile phone, a tablet computer, a desktop computer, a laptop computer, a handheld computer, a notebook computer, an ultra-mobile personal computer (UMPC), a netbook, as well as a cellular phone, a personal digital assistant (PDA), an augmented reality (AR)/virtual reality (VR) device and other terminal devices)) that supports the generation, transmission, and display of audio and video data, etc.

It can be understood that, the architecture of the system shown in FIG. 1 does not constitute a limitation on the embodiments of the present disclosure, and the architecture of the system shown in FIG. 1 may include more or fewer components than those shown, or a combination of certain components, or a different arrangement of components.

Methods provided in the present disclosure will be introduced in detail below in conjunction with the drawings of the specification.

As shown in FIG. 2, the embodiments of the present disclosure provide a path determination method, and the method includes the following contents.

S101, acquire a first network topology of an audio and video system.

Attribute information of a link in the first network topology includes a transmission parameter of the link, and the transmission parameter of the link includes a concavity parameter, an additive parameter, and a multiplicative parameter.

In some embodiments, the concavity parameter includes a bandwidth, the additive parameter includes a cost and/or a delay, and the multiplicative parameter includes a packet loss rate. In some embodiments, the additive parameter may also include a parameter such as jitter, hop count of nodes, etc.

In some embodiments, for a path between any two of nodes in the first network topology, a value of the concavity parameter of the path is equal to a minimum value of values of concavity parameters of all links constituting the path.

Exemplarily, by taking the bandwidth as an example, $G=(V, E)$ is defined to represent the first network topology, $V$ represents a set of nodes, and $E$ represents a set of links connecting nodes. $P(s, d)$ is defined as a transmission path set in the first network topology, $s \in V$ represents a source node, and $d \in V$ represents a destination node. The bandwidth of a path $p$ may be determined based on the following Formula (1):

$$\text{width}(p)=\min\{B(e)\}, e \in p \qquad \text{Formula (1).}$$

In the above formula, $\text{width}(p)$ is the bandwidth of the path $p$, $B(e)$ is a bandwidth of a link constituting the path, $e$ is a link in the first network topology, $e \in E$, $p \in P$.

In some embodiments, for a path between any two of the nodes in the first network topology, a value of the additive parameter of the path is obtained by performing an addition operation on values of additive parameters of all links constituting the path.

Exemplarily, the cost of the path p may be determined based on the following Formula (2):

$$\text{cost}(p) = \sum_{e \in p} C(e) \qquad \text{Formula (2).}$$

In the above formula, cost(p) is the cost of the path p, C(e) is a cost of a link constituting the path, e is a link in the first network topology, $e \in E$, $p \in P$.

Exemplarily, the delay of the path p may be determined based on the following Formula (3):

$$\text{delay}(p) = \sum_{e \in p} D(e) \qquad \text{Formula (3).}$$

In the above formula, delay(p) is the delay of the path p, D(e) is a delay of a link constituting the path, e is a link in the first network topology, $e \in E$, $p \in P$.

In some embodiments, for a path between any two of the nodes in the first network topology, a value of the multiplicative parameter of the path is obtained by performing a multiplication operation on values of multiplicative parameters of all links constituting the path.

Exemplarily, the packet loss rate of the path p may be determined based on the following Formula (4):

$$\text{loss}(p) = 1 - \prod_{e \in p} (1 - L(e)) \qquad \text{Formula (4).}$$

In the above formula, loss(p) is the packet loss rate of the path p, L(e) is a packet loss rate of a link constituting the path, e is a link in the first network topology, $e \in E$, $p \in P$.

In some embodiments, the control node of the audio and video system may perform data sensing in real time at a preset frequency, to acquire a real-time network topology of the audio and video system.

In some embodiments, the above-mentioned network sensing may be implemented in a manner of a periodical task. The control node may analyze a relationship between edge nodes by the network sensing module, initiate network detection requests to respective nodes in the edge cloud, and drive the edge nodes to periodically perform network detection on connected nodes based on the above-mentioned preset frequency, to acquire detection data such as packet loss rate, delay, jitter, and used bandwidth of the links between respective edge nodes.

In some embodiments, the control node may also acquire and record inherent data of each node (e.g., a node IP address, a node identity (identity document, ID), a node hardware parameter (e.g., CPU or memory, etc.), etc.).

In some embodiments, the control node, after performing the network sensing to acquire data, may perform an abnormal processing on received data, such as detecting whether the data is returned in a standard format, whether the data is out of bounds, etc., to determine whether the data is abnormal, and process data that is detected as abnormal.

In some embodiments, in a case where the network topology of the audio and video system changes (e.g., nodes are added or deleted, connected edges are added or deleted, etc.), the control node may perform the network sensing again based on the real-time network topology. For example, the control node may initiate new network detection requests and data collection requests to respective edge nodes, to acquire new data, and update the first network topology based on the new data that is acquired.

S102, determine a link satisfying a concavity parameter constraint condition from the first network topology, and generate a second network topology based on the link satisfying the concavity parameter constraint condition.

In some embodiments, in a case where the concavity parameter includes a bandwidth, the concavity parameter preset condition includes the bandwidth being less than a preset threshold. That is, the control node, based on the concavity parameter preset condition, may delete a link not satisfying the condition in the first network topology, so as to simplify the network topology, to obtain the second network topology. Exemplarily, by taking the control node 110 in FIG. 1 as an example, the control node 110 may simplify the first network topology of the audio and video system by the simplifying module, to obtain the second network topology.

The preset threshold is a numerical value in the form of a bandwidth value that is preset or determined in real-time based on an actual network topology, a ratio of the real-time bandwidth to a total available bandwidth of the link, and the like. In a case where the bandwidth of the link is greater than or equal to the preset threshold, it indicates that the link is about to be saturated and may no longer be allocated with any traffic, so the control node may delete the link in the first network topology.

In some embodiments, the control node may perform a simplifying operation on the first network topology, based on a simplifying model, to generate the second network topology.

Exemplarily, the above-mentioned concavity parameter constraint condition (e.g., the bandwidth being less than a preset threshold) is preset in the simplifying model. The control node may input the first network topology and bandwidths of links between all nodes in the first network topology into the simplifying model, and the simplifying model may dynamically delete a link with the concavity parameter constraint condition in the first network topology, thereby obtaining the above-mentioned second network topology.

Exemplarily, as shown in FIG. 3, nodes in the first network topology obtained by the network sensing performed by the control node include node A, node B, node C, node D, node E, and node F. The concavity parameter preset condition includes the bandwidth being less than 90% of the total available bandwidth of the link. If the real-time bandwidth of the link from node B to node E is 2.7 Gbps, and the total available bandwidth of the link is 3 Gbps, reaching 90% of the total available bandwidth of the link, and then as shown in FIG. 3, the control node may temporarily delete the link in the network topology diagram to obtain the second network topology.

In some embodiments, the control node may update the second network topology in real time according to data that is obtained by network sensing. If the data obtained by subsequent network sensing indicates that the bandwidth value of the link that has been deleted satisfies the concavity parameter constraint condition, the control node may update the second network topology based on data that is obtained by the new network sensing, to dynamically recover the link in the updated second network topology.

In S103, generate a third network topology based on a key parameter of a link in the second network topology.

The key parameter is a parameter with a highest degree of impact on a target service type among the additive parameter and the multiplicative parameter. Attribute information of a link in the third network topology includes a quantified score determined by the key parameter.

In some embodiments, the control node may, based on a service requirement corresponding to a target service type to which a target service belongs, determine a key parameter of the target service type.

Exemplarily, the target service may include a cloud computer, an interactive whiteboard, video conference, video Internet of Things, interactive live streaming, Extended Reality (XR), and other possible services.

In an example, if the target service is a service such as a cloud computer, interactive whiteboard, etc., which has a very low tolerance for delay and may tolerate a small amount of packet loss, the control node may determine that the target service type is a type of service with a prioritized requirement for delay (i.e., the key parameter of the target service type is the delay). In another example, if the target service is a compressed data file transmission or other services whose requirement for packet loss rate takes priority over delay or other requirements. The control node may determine that the target service type is a type of service with a prioritized requirement for packet loss rate, that is, the key parameter of the target service type is the packet loss rate. In addition, the target service type in the embodiments of the present disclosure may also include other possible service types, which will not be enumerated herein one by one.

In some embodiments, the control node may obtain a quantified score of the link based on the key parameter of the link, and generate the third network topology, by using a structure of the second network topology as a structure of the third network topology and using the quantified score of the link as attribute information of the link in the third network topology.

The quantified score of the link is used to characterize a reliability of the link used for transmitting service data of the service type.

As an example, the quantified score may be negatively correlated with the reliability. That is, the smaller the quantified score of the link is, it indicates that the higher the reliability of the link used for transmitting the service data of the service type is. Conversely, the higher the quantified score of the link is, it indicates that the lower the reliability of the link used for transmitting the service data of the service type is.

As another example, the quantified score may be positively correlated with the reliability. It should be understood that, the relationship between the quantified score and the reliability mainly depends on an algorithm for determining the quantified score. The quantified score being negatively correlated with the reliability is mainly explained in detail below.

In some embodiments, the control node may obtain the third network topology based on the key parameter of the target service type and a quantifying model. The quantifying model may map the key parameter of the link into a numerical value according to a preset mathematical transformation relationship, and the numerical value represents the quantified score of the link. By taking the control node 110 in FIG. 1 as an example, the quantifying model of the control node 110 may be preset with the quantifying model, and the control node 110 may determine the third network topology by the quantifying module.

Exemplarily, the control node may input the second network topology and key parameters of links between all nodes of the second network topology into the quantifying model, and then obtain the above-mentioned third network topology.

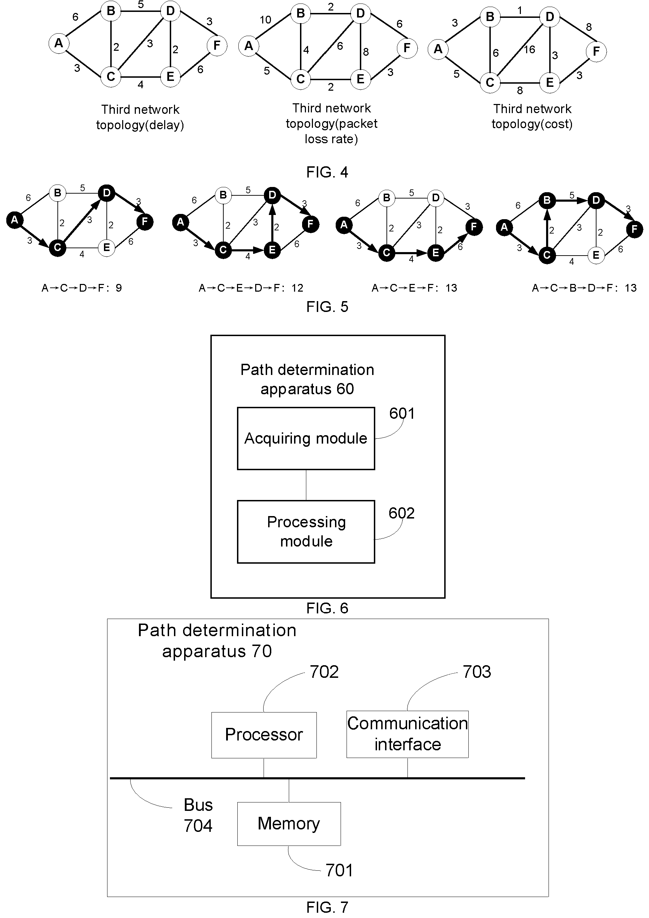

FIG. 4 shows a third network topology with delay, packet loss rate and cost as key parameters. As shown in FIG. 4, the third network topology includes node A, node B, node C, ..., and node F. By taking the third network topology with delay as the key parameter as an example, a quantified score of link A-B composed between node A and node B is 6, a quantified score of link A-C is 3, a quantified score of link B-D is 5, a quantified score of link B-C is 2, a quantified score of link C-E is 4, a quantified score of link C-D is 3, a quantified score of link D-E is 2, a quantified score of link D-F is 3, and a quantified score of link E-F is 6.

In an implementation, the control node may determine quantified network topologies corresponding to a plurality of possible key parameters in advance, and then may select a quantified network topology corresponding to the target service type (i.e., the above-mentioned third network topology) based on the service type to which the target service belongs.

In another implementation, the control node may first determine the target service type, and then determine the above-mentioned third network topology based on service requirements corresponding to the target service type and the second network topology of the audio and video system.

It should be noted that, the above technical solutions may classify parameters in the audio and video system by a path planning method based on the key parameter, first simplify the first network topology using the concavity parameter to obtain the second network topology. Then, based on the differences between different services and the key parameter that has the most significant impact on the target service, the third network topology is determined, thereby determining candidate paths in the third network topology. In this way, the third network topologies corresponding to different service types may be computed based on different key parameters, without parameter synthesis, that is, there is no need to determine a function mapping model of the synthesis parameter, which may reduce the complexity of the computing and improve the implementability of the path planning.

In S104, determine a plurality of candidate paths based on the third network topology.

In some embodiments, the control node may determine a plurality of paths between a first node and a second node based on the third network topology, and determine a path score of each of the plurality of paths. The path score of the path is obtained based on the quantified scores of all links constituting the path. The first node and the second node are any two of the nodes in the third network topology.

Similar to the quantified score of the link, the path score of the path is used to characterize the reliability of the path used for transmitting service data of the service type. Also, the path score may be negatively correlated with the reliability. Alternatively, the path score may be positively correlated with the reliability. It should be understood that, the relationship between the path score and the reliability mainly depends on an algorithm for determining the path score. The path score being negatively correlated with reliability is mainly explained below in detail.

Furthermore, the control node may determine top N paths with smallest path scores from the plurality of paths as a plurality of candidate paths between the second node and the first node, where N is a positive integer greater than 1. Exemplarily, by taking the control node 110 in FIG. 1 as an example, the above-mentioned plurality of candidate paths may be determined by the computing module.

In some embodiments, the above-mentioned plurality of paths between the first node and the second node include a first path and a second path, and the first path is a shortest path from the first node to the second node. The second path consists of a shortest path from the first node to a third node and a second shortest path from the third node to the second node, and the third node is any one of the nodes other than the first node and the second node in the first path.

In the third network topology, the shortest path from the first node to the second node may be interpreted as a path with a smallest path score from the first node to the second node in the third network topology.

Exemplarily, the process of the control node to determine the plurality of candidate paths may be implemented as, for example, the following steps.

In S1, the control node determines a first node (source node) and a second node (destination node) in the third network topology.

Exemplarily, the control node may define G=(V, E) to represent the first network topology, and V represents a set of nodes. E represents a set of links connecting nodes. The control node denotes the first node as s, $s \in V$, and denotes the second node as d, $d \in V$. An i-th candidate path from the node s to the node d may be denoted as $p_i(s, d)$, and a multi-path set may be denoted as $P_n(s, d) = \{p_1(s, d), p_2(s, d), \cdots, p_n(s, d)\}$.

In S2, the control node computes a shortest path from the first node s to the second node d, that is, a path with a smallest path score in the third network topology. In addition, the control node may denote the shortest path as $p_1(s, d)$.

In S3, the control node determines all other nodes other than the second node located on $p_1(s, d)$ as deviation nodes, and records them in a deviation node set, denoted as $D=\{d_1, d_2, \cdots, d_x\}$. There are x deviation nodes in the deviation node set.

In S4, the control node, according to the deviation node $d_i$ (i=1, 2, $\cdots$, x), determines a shortest path from the deviation node $d_i$ to the second node d, that is, a path with a smallest quantified score, which may be used as a candidate path.

In S5, the control node determines the path between the first node and the second node, according to the path from the first node to the deviation node $d_i$ in $p_1(s, d)$ and the shortest path from the deviation node $d_i$ to the second node determined in S4, and denotes it in a second path set C(s, d).

In S6, after traversing all the deviation nodes in D = {$d_1$, $d_2$, ···, $d_x$}, the control node may determine a path with a smallest path score in C(s, d) and denote the path as $p_2(s, d)$. Furthermore, the control node may move from the set C(s, d) to the set $P_n(s, d)$. $p_2(s, d)$ is the second shortest path between the first node and the second node and may be used as a candidate path.

In S7, the control node may update the deviation node set based on the determination manner shown in S3 to S6, and determine new candidate paths until a number of paths in the deviation set $P_n(s, d)$ reaches N.

Exemplarily, as shown in FIG. 5, candidate paths from source node A to destination node F are determined in the third network topology with the delay as the key parameter, if N is 4. Furthermore, based on the third network topology, the control node may determine candidate path A→C→D→F with a path score of 9, candidate path A→C →E→ D→F with a path score of 12, candidate path A→C→E→F with a path score of 13, and candidate path A→C→B→D→F with a path score of 13.

In some embodiments, the control node may compute a candidate path between any two of the nodes in the third network topology. Furthermore, based on the source node and the destination node of the target service, the plurality of candidate paths between the source node and the destination node are determined from all candidate paths in the third network topology.

In S105, determine a target path satisfying a path selection constraint condition from the plurality of candidate paths.

In some embodiments, the control node may acquire transmission parameters of all links constituting the candidate path, and determine a transmission parameter of the candidate path based on the transmission parameters of all links constituting the candidate path.

In an example, for the concavity parameter, a value of the concavity parameter of the candidate path is equal to a minimum value of values of concavity parameters of all links constituting the candidate path. For example, the bandwidth value of the candidate path may be determined based on the above Formula (1).

In another example, for the additive parameter, a value of the additive parameter of the candidate path is obtained by performing an addition operation on values of additive parameters of all links constituting the candidate path. For example, the cost of the candidate path may be determined based on the above Formula (2), and the delay of the candidate path may be determined based on the above Formula (3).

In yet another example, for the multiplicative parameter, a value of the multiplicative parameter of the candidate path is obtained by performing a multiplication operation on values of multiplicative parameters of all links constituting the path. For example, the packet loss rate of the candidate path may be determined based on the above Formula (4).

In some embodiments, the control node may also express the transmission parameter of the candidate path in a parameter expression.

Exemplarily, by taking the third network topology with the delay as the key parameter as an example, path information is "A→C→ D→ F". For link A→C, a delay is 30 ms, a packet loss rate is 1%, a jitter is 10 ms, and a cost is 1. For link C→D, a delay is 40 ms, a packet loss rate is 1%, a jitter is 10 ms, and a cost is 2. For link D→F, a delay is 30 ms, a packet loss rate is 1%, a jitter is 10 ms, and a cost is 3. Then, for the path A→C → D→F, a delay is 100 ms, a packet loss rate is 3%, a jitter is 4ms, and a cost is 6. Therefore, the parameter expression of the candidate path may be expressed as: "type=1, path='A-C-D-F', score=9, delay=100, jitter=30, lost=3, hop=4, cost=6". type=1 represents a service type, that is, a service type with the service requirement for the prioritized delay.

Therefore, the control node may determine a path satisfying the path selection constraint condition from the plurality of candidate paths as a target path, based on the transmission parameter of each of the plurality of candidate paths.

The path selection constraint condition is used to constrain the transmission parameter of the target path. It should be noted that, the path selection constraint condition is determined based on a parameter requirement of the target service. In a case where the target service has constraints on a plurality of transmission parameters, the path selection constraint condition is used to constrain the plurality of transmission parameters of the target path. Of course, in a case where the target service has a constraint on only a transmission parameter, the path selection constraint condition is used to constrain the transmission parameter of the target path.

In some embodiments, the path selection constraint condition may include the multiplicative parameter and/or the additive parameter among the transmission parameters of the path. For example, delay, packet loss rate, jitter, hop count of nodes, etc. In addition, the path selection constraint condition may also include the concavity parameter among the transmission parameters of the path. In some embodiments, the path selection constraint condition may further include service information (e.g., a service type of the target service, a source node, a destination node, etc.) of the target service.

In some embodiments, the control node may also express the path selection constraint condition of the target service by using a multi-constraint logic expression. The manner of representing the transmission parameter in the path selection constraint condition indicated in the multi-constraint logic expression should be consistent with the above-mentioned parameter expression (for example, including the source node (src), destination node (dest), delay (delay), packet loss rate (lost), jitter (jitter), hop count of nodes (hop), etc.). Furthermore, the control node may combine a detailed constraint condition of each parameter in the path selection constraint condition with operators, to form a multi-constraint logic expression.

If the path selection constraint condition includes: the source node being A, the destination node being F, and the service type is a cloud computer. In addition, for a full link, a transmission delay is less than 350 ms or a jitter is less than 50 ms, a packet loss rate is less than 5%, and a hop count of nodes is less than 5. Thus, the control node may determine the multi-constraint logic expression as: "src='A' and dest='F' and type='1' and delay<350 or jitter<50 and lost<5 and hop<5".

Furthermore, the control node may match the multi-constraint logic expression representing the path selection constraint condition with the parameter expression of each candidate path mentioned above, to determine the target path. By taking the control node 110 in FIG. 1 as an example, the control node 110 may match the path selection constraint condition of the service with the transmission parameter of the candidate path, by the matching module.

Exemplarily, if parameter expressions of the plurality of candidate paths include: "type=1, path='A-C-D-F', delay=100, jitter=30, lost=3, hop=4, cost=6", "type=1, path='A-C-E-D-F', delay=200, jitter=30, lost=6, hop=5, cost=10", "type=1, path='A-C-E-F', delay=300, jitter=40, lost=4, hop=4, cost=15", and "type=1, path='A-C-B-D-F', delay=400, jitter=40, lost=4, hop=5, cost=13". Based on the above multi-constraint logical expression, it may be determined that the parameter expressions that match the multi-constraint logical expression include "type=1, path='A-C-D-F', delay=100, jitter=30, lost=3, hop=4, cost=6" and "type=1, path='A-C-E-F', delay=300, jitter=40, lost=4, hop=4, cost=15", so the paths corresponding to the matched parameter expressions may be determined as the target path(s).

Based on the above embodiments, the method may first simplify the network topology based on the concavity parameter, and then determine the third network topology according to key parameters of different services, so as to determine the candidate paths. Furthermore, various parameters of respective candidate paths may be reflected more accurately, and based on the parameter of the candidate path, a path satisfying various parameter requirements of the service may be determined from the candidate paths. In this way, more accurate path planning may be achieved. In addition, the path planning may be enabled to be applicable to various service scenarios, thereby improving the practicality of the path planning.

The above introduces the solutions provided in the present disclosure mainly from the perspective of interaction between various nodes. It can be understood that, in order to implement the above functions, the various nodes (e.g., apparatuses or devices) contain corresponding hardware structures and/or software modules for performing various functions. Those skilled in the art should easily realize that the present disclosure can be implemented in the form of hardware or a combination of hardware and computer software, in combination with the algorithm steps of various examples described in the embodiments disclosed herein. Whether a certain function is performed by hardware or by computer software driving hardware, depends on the specific applications and design constraint conditions of the technical solution. Professional technicians may use different methods to implement the described functions, for each specific application, but this implementation should not be considered beyond the scope of the present disclosure.

FIG. 6 is a schematic diagram of components of a path determination apparatus according to some embodiments, and the path determination apparatus is applied to a first node. As shown in FIG. 6, the path determination apparatus 60 includes an acquiring module 601 and a processing module 602.

In some embodiments, the acquiring module 601 is configured to acquire a first network topology of an audio and video system, where attribute information of a link in the first network topology includes a transmission parameter of the link, and the transmission parameter of the link includes a concavity parameter, an additive parameter, and a multiplicative parameter. The processing module 602 is configured to determine a link satisfying a concavity parameter constraint condition from the first network topology, and generate a second network topology based on the link satisfying the concavity parameter constraint condition. The processing module 602 is further configured to generate a third network topology based on a key parameter of a link in the second network topology, where the key parameter is a parameter with a highest degree of impact on a target service type among the additive parameter and the multiplicative parameter; and attribute information of a link in the third network topology includes a quantified score determined by the key parameter. The processing module 602 is further configured to determine a plurality of candidate paths based on the third network topology, and determine a target path satisfying a path selection constraint condition from the plurality of candidate paths.

In some embodiments, the concavity parameter includes a bandwidth; the additive parameter includes a cost and/or a delay; and the multiplicative parameter includes a packet loss rate.

In some embodiments, in a case where the concavity parameter includes a bandwidth, a concavity parameter preset condition includes the bandwidth being less than a preset threshold.

In some embodiments, the processing module 602 is configured to obtain the quantified score of the link based on the key parameter of the link, and generate the third network topology, by using a structure of the second network topology as a structure of the third network topology and using the quantified score of the link as the attribute information of the link in the third network topology.

In some embodiments, the processing module 602 is configured to: determine a plurality of paths between a first node and a second node and determine a path score of each of the plurality of paths, based on the third network topology; a path score of the path is obtained based on quantified scores of all links constituting the path; the first node and the second node are any two of nodes in the third network topology. Top N paths with smallest path scores from the plurality of paths are determined as a plurality of candidate paths between the second node and the first node, where N is a positive integer greater than 1.

In some embodiments, the plurality of paths between the first node and the second node include a first path and a second path, the first path is a shortest path from the first node to the second node; the second path consists of a shortest path from the first node to a third node and a second shortest path from the third node to the second node, and the third node is any one of nodes other than the first node and the second node in the first path.

In some embodiments, the acquiring module 601 is configured to acquire transmission parameters of all links constituting the candidate path, and determine a transmission parameter of the candidate path based on the transmission parameters of all links constituting the candidate path. The processing module 602 is configured to determine the target path satisfying the path selection constraint condition from the plurality of candidate paths based on the transmission parameter of each of the plurality of candidate paths.

In some embodiments, for the concavity parameter, a value of the concavity parameter of the candidate path is equal to a minimum value of values of concavity parameters of all links constituting the candidate path; for the additive parameter, a value of the additive parameter of the candidate path is obtained by performing an addition operation on values of additive parameters of all links constituting the candidate path; and for the multiplicative parameter, a value of the multiplicative parameter of the candidate path is obtained by performing a multiplication operation on values of multiplicative parameters of all links constituting the candidate path.

It should be noted that, the modules in FIG. 6 may also be referred to as units. For example, the acquiring module may be referred to as an acquiring unit. In addition, in the embodiments shown in FIG. 6, the names of the respective modules may not be the names shown in the figure, and for example, the acquiring module may also be referred to as a communication module.

If the respective units in FIG. 6 are implemented in the form of software functional modules, and sold or used as an independent product, the respective units may be stored in a computer readable storage medium. Based on this understanding, the technical solutions of the embodiments of the present disclosure may be essentially, or a part of the technical solutions that contributes to the existing technology, or all or a part of the technical solutions, may be embodied in the form of a software product, and the computer software product is stored in a storage medium, and includes a plurality of instructions to cause a computer device (which may be a personal computer, a server, or a network device, etc.) or processor to perform all or a part of the steps of the methods of various embodiments of the present disclosure. The storage medium storing the computer software product includes various types of medium capable of storing program codes, such as a U disk (USB flash disk), a mobile hard disk, a read-only memory (ROM), a random access memory (RAM), a magnetic disk, or an optical disk, etc.

In a case where the functions of the above integrated modules are implemented in the form of hardware, the embodiments of the present disclosure further provide a structural schematic diagram of a path determination apparatus. As shown in FIG. 7, the path determination apparatus 70 includes a processor 702, a communication interface 703, and a bus 704. In some embodiments, the data transmission apparatus 70 may further include a memory 701.

The processor 702 may implement or perform various exemplary logical blocks, modules and circuits described in conjunction with the content disclosed in the present disclosure. The processor 702 may be a central processing unit, a general-purpose processor, a digital signal processor, an application specific integrated circuit, a field programmable gate array or other programmable logic devices, transistor logic devices, hardware components, or any combination thereof. The processor 702 may implement or perform various exemplary logical blocks, modules and circuits described in conjunction with the content disclosed in the present disclosure. The processor 702 may also be a combination that implements the computing functions, for example, including a combination of one or more microprocessors, a combination of a digital signal processor (DSP) and a microprocessor, or the like.

The communication interface 703 is configured to connect with other devices via a communication network. The communication network may be an Ethernet, a radio access network, a wireless local area network (WLAN), or the like.

The memory 701 may be, but be not limited to, a read-only memory (ROM) or other types of static storage devices capable of storing static information and instructions, a random access memory (RAM) or other types of dynamic storage devices capable of storing information and instructions, or may also be an electrically erasable programmable read-only memory (EEPROM), a magnetic disk storage medium or other magnetic storage devices, or any other medium capable of being used to carry or store the desired program codes in the form of instructions or data structures and capable of being accessed by a computer.

As an implementation, the memory 701 may exist independently of the processor 702, and the memory 701 may be connected to the processor 702 via the bus 704 and is configured to store instructions or program codes. The processor 702, when calling and executing the instructions or program codes stored in the memory 701, is capable of implementing the information processing mode determining method provided in the embodiments of the present disclosure.

As another implementation, the memory 701 may also be integrated with the processor 702.

The bus 704 may be an extended industry standard architecture (EISA) bus or the like. Buses 704 may be divided into address buses, data buses, control buses, or the like. For the convenience of representation, only one thick line is used in FIG. 7 for representation, but it does not mean that there is only one bus or one type of bus.

From the description of the above embodiments, those skilled in the art can clearly understand that, for convenience and brevity of description, an illustration is only given by the division of functional modules mentioned above. In practical applications, the functions mentioned above may be allocated to be completed by different functional modules according to requirements. That is, the internal structure of the device or apparatus is divided into different functional modules to complete all or a part of the functions mentioned above.

The embodiments of the present disclosure further provide a computer-readable storage medium. All or a part of the procedures in the method embodiments mentioned above may be completed by related hardware indicated by computer instructions, and the program may be stored in the computer-readable storage medium mentioned above. The program, when executed, may include the procedures of the method embodiments mentioned above. The computer readable storage medium may be or a memory of any one of the foregoing embodiments. The computer readable storage medium mentioned above may also be an external storage device of the device or apparatus mentioned above, e.g., a plug-in hard disk, a smart memory card (smart media card, SMC), a secure digital (SD) card, a flash card, etc., equipped on the device or apparatus mentioned above. Furthermore, the computer-readable storage medium mentioned above may further include both an internal storage unit and an external storage device of the device or apparatus mentioned above. The computer-readable storage medium mentioned above is used to store the computer program mentioned above, and other programs and data required for the device or apparatus mentioned above. The computer-readable storage medium mentioned above may further be used to temporarily store data that has been output or is to be output. The readable storage medium includes a non-transitory computer readable storage medium.

The embodiments of the present disclosure further provide a computer program product, the computer product contains a computer program, the computer program product, when executed on a computer, causes the computer to perform any information processing mode determining method provided in the above embodiments.

Although the present disclosure is described herein in conjunction with respective embodiments, other variations of the disclosed embodiments may be understood and implemented by those skilled in the art by viewing the drawings, the disclosed content, and the attached claims, in the process of implementing the claimed processes of the present disclosure. In the claims, the word "comprise/comprises/comprising" does not exclude other components or steps, and "a/an" or "one" does not exclude multiple cases. A single processor or other unit may implement functions of several items listed in the claims. Although certain measures are recorded in dependent claims different from each other, it does not mean that these measures cannot be combined to exert a good effect.

Although the present disclosure is described in conjunction with detailed features and embodiments thereof, it is apparent that various modifications and combinations may be made thereto without departing from the spirit and scope of the present disclosure. Accordingly, the specification and drawings are merely exemplary explanation of the present disclosure as defined by the attached claims and are deemed to cover any and all modifications, variations, combinations or equivalents within the scope of the present disclosure. Obviously, those skilled in the art may make various changes and variations to the present disclosure without departing from the spirit and scope of the present disclosure. In this way, if these modifications and variations of the present disclosure fall within the scope of the claims of the present disclosure and their equivalent technologies, the present disclosure is also intended to include these modifications and variations therein.

The above is merely specific implementations of the present disclosure, but the protection scope of the present disclosure is not limited thereto. Any change or replacement within the technical scope disclosed in the present disclosure shall be included in the protection scope of the present disclosure. Therefore, the protection scope of the present disclosure should be determined based on the protection scope of the claims.

**Claims**

1. A path determination method, **characterized by** comprising:

    acquiring a first network topology of an audio and video system, wherein attribute information of a link in the first network topology comprises a transmission parameter of the link, and the transmission parameter of the link comprises a concavity parameter, an additive parameter, and a multiplicative parameter;
    determining a link satisfying a concavity parameter constraint condition from the first network topology, and generating a second network topology based on the link satisfying the concavity parameter constraint condition;
    generating a third network topology based on a key parameter of a link in the second network topology, wherein the key parameter is a parameter with a highest degree of impact on a target service type among the additive parameter and the multiplicative parameter; and attribute information of a link in the third network topology comprises a quantified score determined by the key parameter;
determining a plurality of candidate paths based on the third network topology; and
determining a target path satisfying a path selection constraint condition from the plurality of candidate paths.

2. The method according to claim 1, wherein the concavity parameter comprises a bandwidth; the additive parameter comprises a cost and/or a delay; and the multiplicative parameter comprises a packet loss rate.

3. The method according to claim 1, wherein in a case where the concavity parameter comprises a bandwidth, a concavity parameter preset condition comprises the bandwidth being less than a preset threshold.

4. The method according to claim 1, wherein generating the third network topology based on the key parameter of the link in the second network topology, comprises:

   obtaining the quantified score of the link based on the key parameter of the link; and
   generating the third network topology, by using a structure of the second network topology as a structure of the third network topology and using the quantified score of the link as the attribute information of the link in the third network topology.

5. The method according to claim 1, wherein determining the plurality of candidate paths based on the third network topology, comprises:

   determining a plurality of paths between a first node and a second node and determining a path score of each of the plurality of paths, based on the third network topology, wherein path scores of the plurality of paths are obtained based on quantified scores of all links constituting the plurality of paths, and the first node and the second node are any two of nodes in the third network topology; and
   determining top N paths with smallest path scores from the plurality of paths as a plurality of candidate paths between the second node and the first node, where N is a positive integer greater than 1.

6. The method according to claim 5, wherein the plurality of paths between the first node and the second node comprise a first path and a second path, the first path is a shortest path from the first node to the second node; the second path consists of a shortest path from the first node to a third node and a second shortest path from the third node to the second node, and the third node is any one of nodes other than the first node and the second node in the first path.

7. The method according to claim 1, wherein determining the target path satisfying the path selection constraint condition from the plurality of candidate paths, comprises:

   acquiring transmission parameters of all links constituting the candidate path, and determining a transmission parameter of the candidate path based on the transmission parameters of all links constituting the candidate path; and
   determining the target path satisfying the path selection constraint condition from the plurality of candidate paths based on the transmission parameter of each of the plurality of candidate paths.

8. The method according to claim 7, wherein,

   for the concavity parameter, a value of the concavity parameter of the candidate path is equal to a minimum value of values of concavity parameters of all links constituting the candidate path;
   for the additive parameter, a value of the additive parameter of the candidate path is obtained by performing an addition operation on values of additive parameters of all links constituting the candidate path; and
   for the multiplicative parameter, a value of the multiplicative parameter of the candidate path is obtained by performing a multiplication operation on values of multiplicative parameters of all links constituting the candidate path.

9. A communication apparatus, **characterized by** comprising: a memory and a processor; wherein the memory is coupled with the processor; the memory is configured to store instructions executable by the processor; and the processor, when executing the instructions, performs the method according to any one of claims 1 to 8.

10. A computer readable storage medium, **characterized in that** the computer readable storage medium has stored computer instructions thereon, and the computer instructions, when executed on a communication apparatus, cause the communication apparatus to perform the method according to any one of claims 1 to 8.

Control node 110

| Network sensing module | Simplifying module | Quantifying module | Computing module | Matching module |

Center cloud

- - - - - - - - - - - - - - - - - - - - - - - - - - - - - - - - - - - - - - - - - - -

Edge cloud

Signaling transmission

Edge node 120 — Edge node 120

Edge node 120

...... 

Edge node 120 — Edge node 120

Edge node 120

FIG. 1

| Acquire a first network topology of an audio and video system | S101 |

| Determine a link satisfying a concavity parameter constraint condition from the first network topology, and generate a second network topology on the basis of the link satisfying the concavity parameter constraint condition | S102 |

| Generate a third network topology on the basis of key parameters of the link in the second network topology | S103 |

| Determine a plurality of candidate paths on the basis of the third network topology | S104 |

| Determine a target path satisfying a path selection constraint condition from the plurality of candidate paths | S105 |

FIG. 2

First network topology

Second network topology

FIG. 3

Third network topology(delay)

Third network topology(packet loss rate)

Third network topology(cost)

FIG. 4

A→C→D→F: 9

A→C→E→D→F: 12

A→C→E→F: 13

A→C→B→D→F: 13

FIG. 5

Path determination apparatus 60

Acquiring module — 601

Processing module — 602

FIG. 6

Path determination apparatus 70

Processor — 702

Communication interface — 703

Bus 704

Memory

— 701

FIG. 7

## INTERNATIONAL SEARCH REPORT

| International application No. |
| --- |
| **PCT/CN2024/086335** |

**A. CLASSIFICATION OF SUBJECT MATTER**

H04L45/02(2022.01)i; H04W40/24(2009.01)i

According to International Patent Classification (IPC) or to both national classification and IPC

**B. FIELDS SEARCHED**

Minimum documentation searched (classification system followed by classification symbols)

IPC: H04L,H04W

Documentation searched other than minimum documentation to the extent that such documents are included in the fields searched

Electronic data base consulted during the international search (name of data base and, where practicable, search terms used)

CNTXT, DWPI, ENTXTC: 凹性, 成本, 乘性, 带宽, 丢包率, 候选, 加性, 路径, 满足, 删除, 时延, 拓扑, 延迟, 延时, 约束, bandwidth, packet loss, delay, path, select+, topology, constraint

**C. DOCUMENTS CONSIDERED TO BE RELEVANT**

| Category* | Citation of document, with indication, where appropriate, of the relevant passages | Relevant to claim No. |
| --- | --- | --- |
| Y | CN 111083050 A (BEIJING UNIVERSITY OF POSTS AND TELECOMMUNICATIONS) 28 April 2020 (2020-04-28) description, paragraphs [0072]-[0097] | 1-10 |
| Y | CN 112261690 A (BEIHANG UNIVERSITY) 22 January 2021 (2021-01-22) description, paragraphs [0049]-[0094] | 1-10 |
| A | WO 2023078150 A1 (ZTE CORP.) 11 May 2023 (2023-05-11) entire document | 1-10 |
| A | US 2017346691 A1 (ARIA NETWORKS LTD.) 30 November 2017 (2017-11-30) entire document | 1-10 |

☐ Further documents are listed in the continuation of Box C.    ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **12 July 2024** | **17 July 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/086335**

| Patent document cited in search report | | | Publication date (day/month/year) | Patent family member(s) | | | Publication date (day/month/year) |
|---|---|---|---|---|---|---|---|
| CN | 111083050 | A | 28 April 2020 | None | | | |
| CN | 112261690 | A | 22 January 2021 | None | | | |
| WO | 2023078150 | A1 | 11 May 2023 | CN | 16074204 | A | 05 May 2023 |
| US | 2017346691 | A1 | 30 November 2017 | GB | 2536606 | A | 28 September 2016 |
| | | | | WO | 2016083843 | A1 | 02 June 2016 |
| | | | | EP | 3228050 | A1 | 11 October 2017 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310622100